# EUROPÄISCHE PATENTANMELDUNG

(11) **EP 0 834 446 A2**
(43) Veröffentlichungstag der Anmeldung: **08.04.1998**
(21) Anmeldenummer: 97116692.1
(22) Anmeldetag: 25.09.1997
(51) Int. Cl.: B62J 9/00

(54) **Behältnis für einen Fahrrad-Gepäckträger**

(30) Priorität: 04.10.1996 DE 19640994; 09.07.1997 DE 19729353
(71) Anmelder: Löhr GmbH, 59199 Bönen (DE)
(72) Erfinder: Löhr, Hans - Gerhard, 59199 Hamm (DE)
(74) Vertreter: Fleck, Hermann-Josef, Dr.-Ing.

(57) **Zusammenfassung**

Die Erfindung bezieht sich auf ein Behältnis (1) mit Befestigungseinrichtung (1.1,3.1,3.1',3.4,3.4',3.5,6) zum abnehmbaren Festlegen an einem Fahrradgepäckträger (2), wobei mindestens drei Befestigungsstellen (3.1,3.5) vorgesehen sind, von denen mindestens zwei mit einer länglichen Öffnung oder mehreren in einer Reihe angeordneten Öffnungen oder zwei beidseitigen, zueinander parallelen Führungsbahnen versehen sind, und wobei in den Öffnungen Befestigungsstücke (4) quer zu einer jeweils zugeordneten Strebe (2.2) des Gepäckträgers (2) verstellbar gelagert sind. Bei einfacher Ausbildung der Befestigungseinrichtung und einfacher Bedienbarkeit wird eine sichere Anbringung dadurch erzielt, daß die Befestigungsstellen (3.1,3.5) fest in das Behältnis (1) integriert sind, so daß das Behältnis (1) unmittelbar an mindestens drei Punkten des Gepäckträgers (2) abnehmbar festlegbar ist, daß die Befestigungsstücke (4) auf nur einer Seite der zugeordneten Streben (2.2) mittels eines Sicherungsmittels in der Befestigungsstellung (3.1,3.5) gesichert festgelegt sind, wobei sie mit einem Halteabschnitt die zugeordneten Streben (2.2) untergreifen, und daß die Befestigungsstücke (4) durch Lockern der Sicherungsmittel an den Befestigungsstellen (3.1,3.5) soweit zurückstellbar sind, daß die Halteabschnitte aus dem Bereich unter den zugeordneten Streben (2.2) herausgeschoben sind.

## Beschreibung

Die Erfindung bezieht sich auf ein Behältnis mit Befestigungseinrichtung zum abnehmbaren Festlegen an einem Fahrradgepäckträger, wobei mindestens drei Befestigungsstellen vorgesehen sind, von denen mindestens zwei mit einer länglichen Öffnung oder mehreren in einer Reihe angeordneten Öffnungen oder zwei beidseitigen, zueinander parallelen Führungsbahnen versehen sind, und wobei in den Öffnungen Befestigungsstücke quer zu einer jeweils zugeordneten Strebe des Gepäckträgers verstellbar gelagert sind.

Ein Behältnis dieser Art ist in der DE 93 12 515 U1 als bekannt ausgewiesen. Dieses ist auf einer separaten Grundplatte festgelegt, die ihrerseits mittels Schellen an Streben des Gepäckträgers befestigt ist. Die Schellen sind beidseitig der Streben mit Schrauben an der Grundplatte angebracht.

Ein weiteres ähnliches Behältnis ist in der DE 44 29 075 A1 angegeben. Bei diesem bekannten Behältnis ist einerseits zum Festlegen auf einem Gepäckträger eine separate Platte vorgesehen und andererseits zum Anbringen an der Unterseite eines Korbes eine weitere Platte vorhanden. Die einander zugekehrten Seiten der beiden Platten weisen aufeinander abgestimmte Adapterelemente auf, so daß nach Aufsetzen des Korbes mit der daran angebrachten Platte dieser mit einer Drehbewegung an der an dem Gepäckträger angebrachten Platte lösbar angekoppelt werden kann. Ein Behältnis mit dieser Befestigungseinrichtung ist nicht nur aufwendig und verhältnismäßig teuer, sondern es können sich auch Schwierigkeiten beim Anbringen der unteren Platte an dem Gepäckträger und der oberen Platte an dem Fahrradkorb ergeben.

Es gibt auch Fahrradkörbe, die auf ihrer Unterseite zwei nach unten abstehende Haken aufweisen, die unter eine Querstrebe des Gepäckträgers geschoben werden können. Am hinteren Teil des Fahrradkorbes befindet sich eine Einbuchtung, die im Zusammenwirken mit einer Federklappe des Gepäckträgers die Arretierung des Korbes bewirken soll. Häufig paßt ein derartiger Fahrradkorb mit der Befestigungseinrichtung nicht gut an einen vorhandenen Gepäckträger, und der Verbraucher behilft sich mit zusätzlichen Klemmschellen, Kabelbindern oder einem Expander. Eine derartige Befestigung ist nicht zuverlässig, und der Fahrradkorb kann sich durch Erschütterungen lösen und Unfälle verursachen.

Der Erfindung liegt die Aufgabe zugrunde, ein Behältnis, wie z.B. einen Fahrradkorb, der eingangs angegebenen Art bereitzustellen, das mit einfachen, preiswerten Mitteln leicht und sicher an einem beliebigen handelsüblichen Gepäckträger abnehmbar festgelegt werden kann.

Diese Aufgabe wird mit den im Patentanspruch 1 angegebenen Merkmalen gelöst. Hiernach ist also vorgesehen, daß die Befestigungsstellen fest in das Behältnis integriert sind, so daß das Behältnis unmittelbar an mindestens drei Punkten des Gepäckträgers abnehmbar festlegbar ist, daß die Befestigungsstücke auf einer Seite der zugeordneten Streben mittels eines Sicherungsmittels in der Befestigungsstellung gesichert festgelegt sind, wobei sie mit einem Halteabschnitt die zugeordneten Streben untergreifen, und daß die Befestigungsstücke durch Lockern der Sicherungsmittel an den Befestigungsstellen soweit zurückstellbar sind, daß die Halteabschnitte aus dem Bereich unter den zugeordneten Streben herausgeschoben sind.

Durch die fest integrierten Befestigungsstellen erübrigt sich die Verwendung von Zusatzelementen und der Aufbau ist insgesamt einfach. Die schlitzartigen oder in einer Reihe angeordneten Öffnungen ermöglichen nicht nur eine einfache Verschiebung von Befestigungselementen in relativ weiten Bereichen an den mindestens drei Festlege-Punkten des Gepäckträgers, so daß an beliebigen handelsüblichen Gepäckträgern das Behältnis auf einfache Weise zuverlässig festgelegt werden kann, sondern auch eine einfache, schnelle Festlegung und Abnahme des Behältnisses. Dabei ist die Befestigungseinrichtung einfach herstellbar, so daß sich der Preis des Behälters, z.B. eines preiswerten Drahtkorbes, einschließlich der Befestigungseinrichtung nur unwesentlich erhöht. Es ergibt sich ein Behältnis mit integrierter und variabel einstellbarer Befestigungseinrichtung, ohne daß eine zusätzliche Koppelplatte montiert werden muß. Auch Schrauben erübrigen sich, und die zur Fixierung notwendigen Teile sind Bestandteile des Behältnisses.

Eine vorteilhafte Ausgestaltung des Behältnisses mit der Befestigungseinrichtung besteht darin, daß die Befestigungsstellen durch am Boden des Behältnisses angeschweißte oder angeklebte Plattenelemente gebildet sind, und daß die Öffnungen oder die Führungsbahnen als langlochförmige Durchbrüche oder Durchgangsbohrungen ausgebildet sind, durch die Bolzen oder Vorsprünge der Befestigungselemente steckbar sind. Die Platten mit den entsprechenden Öffnungen können bei der Fertigung auf einfache Weise in das Behältnis integriert werden.

Eine stabile Anbringung bei einfacher Handhabung ergibt sich dadurch, daß mindestens zwei der Festlege-Punkte des Gepäckträgers an dessen Längsstreben und mindestens ein Festlege-Punkt an einer Querstrebe angeordnet ist, und daß die Öffnungen senkrecht zu den zugeordneten Streben ausgerichtet sind.

Für die Zugänglichkeit der Befestigungsstellen können die Maßnahmen vorteilhart sein, daß vier Befestigungsstellen vorgesehen sind, und daß die vier zugeordneten Festlege-Punkte des Gepäckträgers an dessen Längsstreben entsprechend den Eckpunkten eines gedachten Rechtecks oder Quadrats liegen, da dabei die Befestigungsstellen z.B. an den randseitigen Längsstreben des Gepäckträgers liegen und dadurch z.B. von einem Schutzblech nicht verdeckt sind.

Ist vorgesehen, daß mindestens zwei der Befestigungsstellen in einem gemeinsamen Plattenelement angeordnet sind, so werden weniger Plattenelemente benötigt, wodurch sich die Herstellung vereinfachen kann.

Ein einfacher Aufbau der Befestigungseinrichtung wird weiterhin dadurch erzielt, daß die Befestigungselemente Befestigungsschrauben sind, mit denen Befestigungsstücke, die die Streben des Gepäckträgers untergreifen, anziehbar sind.

Die Bedienung beim Festlegen des Behältnisses wird weiterhin dadurch unterstützt, daß die Schraubaufnahmen in einem Mittelabschnitt der Befestigungsstücke angeordnet sind, und daß an dem einen Endbereich des Mittelabschnittes ein zur zugeordneten Befestigungsstelle gerichteter Vorsprung zum Bilden eines Halteabschnittes vorgesehen ist, der eine Strebe hintergreift, und an dem anderen Endbereich ein zur zugeordneten Befestigungsstelle gerichteter Stützabschnitt vorgesehen ist, der sich im Bereich der Befestigungsstelle abstützt. Dabei ist es zum Verstellen der Befestigungseinrichtung günstig, wenn vorgesehen ist, daß der Stützabschnitt in einem Führungsabschnitt endet, der in die schlitzförmige Öffnung ragt und darin geführt ist. Durch den Stützabschnitt einerseits und den klauenartigen Halteabschnitt andererseits wird das Befestigungsstück stets eindeutig positioniert und an der entsprechenden Strebe des Gepäckträgers festgelegt, wobei diese fest hintergriffen und eingeklemmt wird.

Eine einfache Bedienung und stabile Festlegung des Behältnisses wird dadurch erzielt, daß die Sicherungsmittel ein im Bereich der Öffnungen an der jeweiligen Befestigungsstelle festgelegtes Arretierelement und einen darüber angeordneten Schieber umfassen, der mittels einer Schiebersicherung an dem Arretierelement gegen ein Verschieben festlegbar ist, und daß der Schieber mittels mindestens eines Vorsprungs die Öffnung durchragt und mit einem Schlitten als Befestigungsstück lösbar verbunden und in die Befestigungsstellung schiebbar und aus dieser zurückschiebbar ist. Das Arretierelement kann dabei zum Beispiel ein separates Teil oder ein an der Befestigungsstelle einstückig angeformtes Teil sein.

Eine gute Führung des Schiebers mit einfacher Verbindungsmöglichkeit an dem Schlitten wird dadurch erzielt, daß der Schieber mit zwei seitlichen, in Verstellrichtung verlaufenden Haltestegen als Vorsprünge versehen ist, die in der Öffnung geführt sind.

Die Verbindung des Schiebers mit dem Schlitten wird bei einfachem Aufbau dadurch begünstigt, daß die Haltestege federnd ausgebildet sind und an ihren freien Enden eine Einführschräge und einen Rastabsatz aufweisen, so daß sie an dem Schlitten verrastbar sind, wobei der Rastabsatz einen Gegenabsatz oder den unteren Rand des Schlittens untergreift.

Für den einfachen Aufbau und eine zuverlässige Funktion sind weiterhin die Maßnahmen vorteilhaft, daß der Schlitten einen einen Freiraum umfassenden Rahmen aufweist, daß das Arretierelement als die Öffnung in Längsrichtung überspannende Brücke ausgebildet ist, die beiderseits zwei Abschnitte der Öffnung als Führungsbahnen freiläßt und an seiner dem Schlitten zugekehrten Unterseite eine Zahnung trägt, mit der zum Arretieren in der Befestigungsstellung eine Gegenzahnung in Eingriff kommt, welche sich an der zugekehrten Oberseite einer in Verstellrichtung des Schlittens gerichteten, in den Freiraum ragenden federnden Arretierzunge des Schlittens befindet.

Ist vorgesehen, daß zum Zurückschieben des Schlittens aus der Befestigungsstellung der Schieber relativ zu dem Schlitten begrenzt in Verstellrichtung verschiebbar ist, bis ein an der Unterseite des Schiebers befindlicher federnder Gleitvorsprung auf die Arretierzunge aufgleitet und diese soweit nach unten drückt, daß die Gegenzahnung außer Eingriff mit der Zahnung kommt, so ist der Schlitten in der Befestigungsstellung sicher festgelegt und wird bei der Verschiebebewegung zum Lösen des Schiebers zunächst aus der Arretierposition freigegeben und dann zurückgeschoben.

Die Sicherung des Schiebers und damit auch des Schlittens wird dadurch verbessert, daß das Arretierelement auf seiner dem Schieber zugekehrten Oberseite eine gezahnte oder gelochte Struktur aufweist, in die die in dem Schieber gehaltene Schiebersicherung einsetzbar ist.

Mit der Maßnahme, daß der Halteabschnitt eine sich unter der zugeordneten Strebe verspannende Klemmzunge aufweist, wird das Behältnis an den Streben des Gepäckträgers zusätzlich verspannt.

Die Erfindung wird nachfolgend anhand von Ausführungsbeispielen unter Bezugnahme auf die Zeichnungen näher erläutert. Es zeigen:
- Fig. 1: in perspektivischer Ansicht ein Behältnis in Form eines Fahrradkorbes mit drei Befestigungsstellen,
- Fig. 2: einen Fahrradgepäckträger in perspektivischer Ansicht und an den Befestigungsstellen anzubringenden Befestigungsstücken,
- Fig. 3: ein an einem Fahrradgepäckträger festgelegtes Behältnis von vorn,
- Fig. 4: ein Behältnis mit drei Befestigungsstellen in Draufsicht,
- Fig. 5: einen Ausschnitt eines an einem Gepäckträger festgelegten Behältnisses,
- Fig. 6: ein Behältnis mit in einer weiteren Anordnung vorgesehenen Befestigungsstellen in Draufsicht,
- Fig. 7: einen Fahrradkorb in Draufsicht mit einer weiteren Anordnung von Befestigungsstellen,
- Fig. 8: einen Fahrradkorb in Draufsicht mit einer weiteren Aus-bildung der Befestigungsstellen,
- Fig. 9A und 9B: einen Fahrradkorb im Querschnitt und in Draufsicht,
- Fig. 10: eine Explosionsdarstellung einer weiteren Ausführungsform der Befestigungseinrichtung,
- Fig. 11A bis 11C: die weitere Befestigungsvorrichtung im Längsschnitt in verschiedenen Stellungen,
- Fig. 12: eine abgewandelte Ausführungsform der weiteren Befestigungseinrichtung in Explosionsdarstellung und
- Fig. 13: die abgewandelte Befestigungseinrichtung nach Fig. 12 im Längsschnitt.

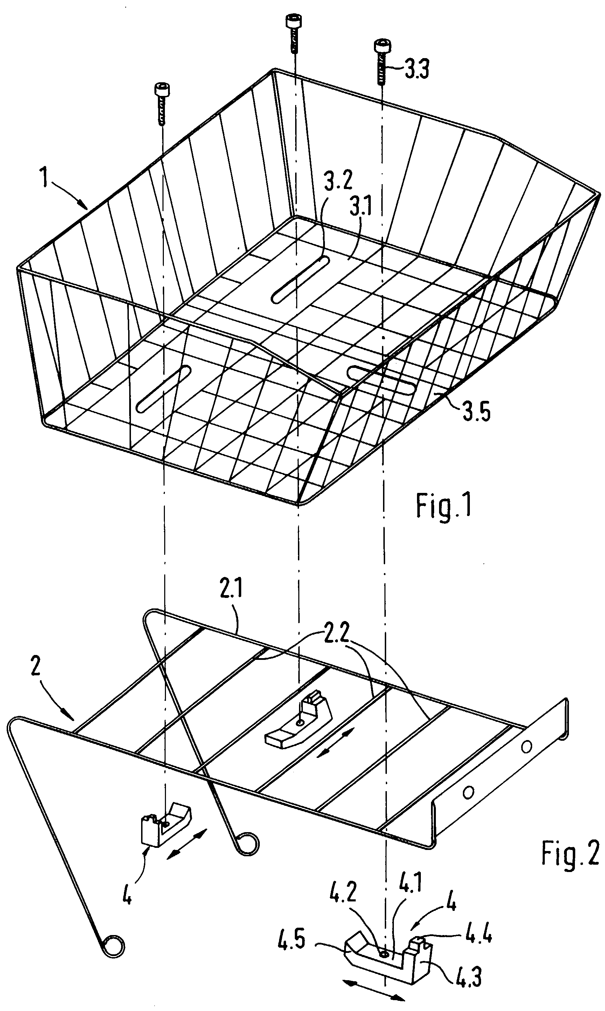

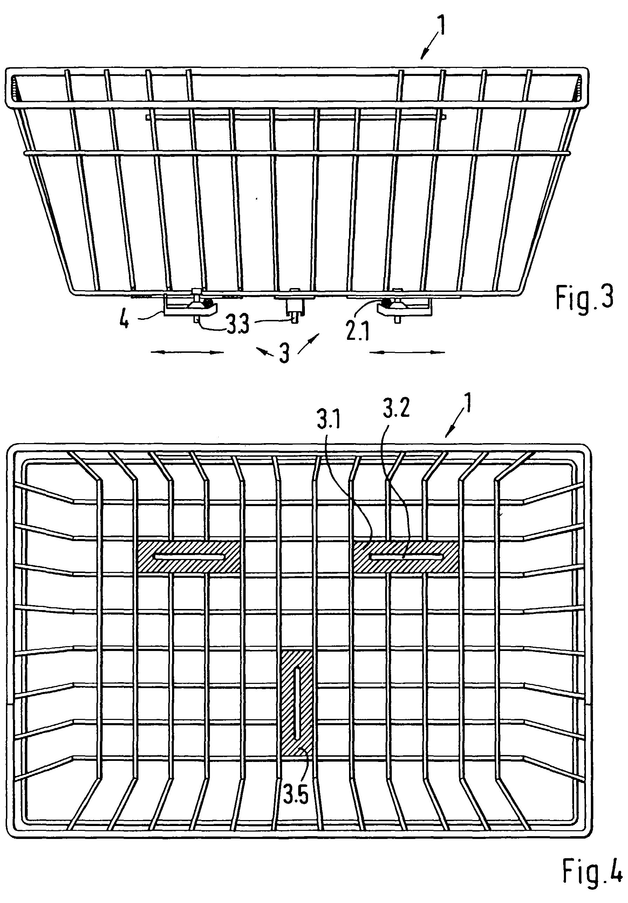

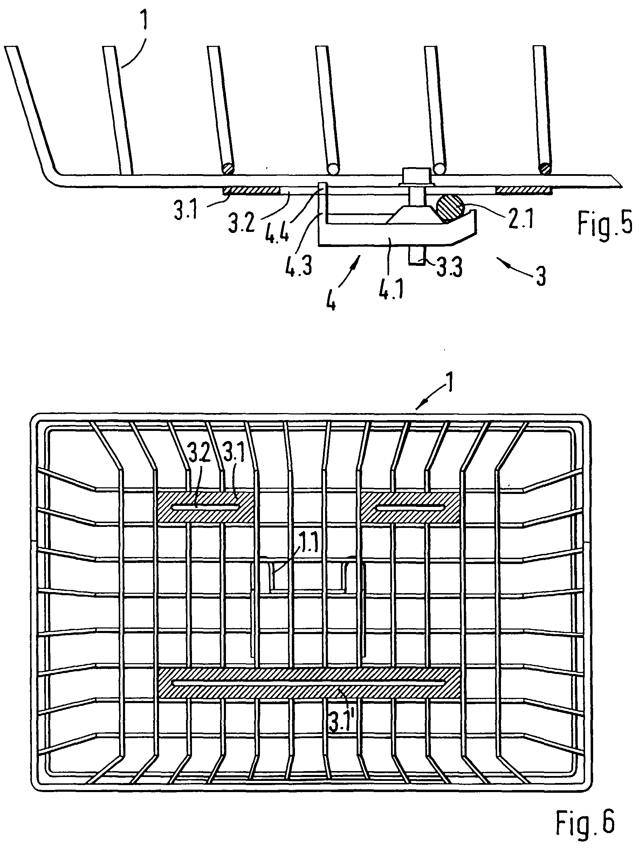

Die Fig. 1 zeigt in perspektivischer Ansicht ein Behältnis 1 in Form eines Fahrradkorbes aus gitterartig angeordneten Drahtstäben. Ähnliche Fahrradkörbe sind auch als feinmaschige Metallkörbe erhältlich. Die Besonderheit des vorliegenden Behältnisses 1 besteht darin, daß im Bodenbereich Befestigungsstellen in Form von Befestigungsplatten 3.1, 3.5 fest integriert, insbesondere eingeschweißt sind. In den plattenartigen Befestigungsstellen 3.1 sind schlitzförmige bzw. langlochförmige Durchbrüche 3.2 ausgebildet, die im hinteren Bereich quer zur Längserstreckung des darunter, in Fig. 2 gezeigten Gepäckträgers 2 im Bereich von dessen Längsstreben 2.1 ausgerichtet sind, während die vordere Befestigungsstelle in Form der Befestigungsplatte 3.5, die etwa in der Mitte bezüglich der Breite des Behältnisses 1 angeordnet ist, einen in Längsrichtung des Gepäckträgers 2 verlaufenden schlitzartigen bzw. langlochförmigen Durchbruch im Bereich einer Querstrebe 2.2 aufweist. Die Befestigungsstellen bzw. Befestigungsplatten 3.1, 3.5 bilden einen Teil einer Befestigungseinrichtung 3 (vgl. Fig. 3 und 5), die vorliegend als Dreipunkt-Befestigung ausgebildet ist. Unterhalb der beiden Längsstreben 2.1 und der zugeordneten Querstrebe 2.2 sind jeweilige Befestigungsstücke 4 angeordnet, die mittels Befestigungsschrauben 3.3 gegen die entsprechenden Streben angezogen werden, so daß diese fest eingeklemmt werden. Mittels der schlitzartigen Öffnungen 3.2 besteht eine Verstellmöglichkeit der Befestigungsstücke 4 zwischen relativ weiten Grenzen, so daß eine einfache Anpassung an unterschiedliche Gepäckträger ermöglicht ist.

Die Befestigungsstücke 4 sind vorliegend gleich ausgebildet und besitzen einen Mittelabschnitt 4.1 mit einer ein Gewinde aufweisenden Schraubaufnahme 4.2. An dem Mittelabschnitt 4.1 ist einerseits ein zur Befestigungsplatte 3.1 bzw. 3.5 gerichteter Stützabschnitt 4.3 mit einem Führungsabschnitt 4.4 angeformt und andererseits ein Halteabschnitt 4.5 mit einem zu der Befestigungsplatte 3.1 zeigenden, abgeschrägten Vorsprung. Der Führungsabschnitt 4.4 ragt in die schlitzartige Öffnung 3.2 der zugeordneten Befestigungsplatte 3.1, während sich die seitlich neben dem Führungsabschnitt 4.4 anschließenden Schulterbereiche des Stützabschnittes 4.3 unter der Führungsplatte 3.1 abstützen, und der Halteabschnitt 4.5 die entsprechende Strebe im angezogenen Zustand klauenartig hintergreift. Mit diesen Maßnahmen sind die Befestigungsstücke 4 einfach verstellbar und an der zugeordneten Strebe auf einfache Weise eindeutig festlegbar. Ein derartiger festgelegter Zustand ist in den Fig. 3 und 5 dargestellt, woraus ersichtlich ist, daß eine Längsstrebe 2.1 in einer zwischen der Schräge des Halteabschnittes 4.5 und einer Schräge eines Schraubdoms des Mittelabschnittes 4.1 unverschiebbar festgeklemmt ist. Der Schraubkopf der Befestigungsschraube 3.3 ist über eine Unterlegscheibe auf der Oberseite der entsprechenden Befestigungsplatte 3.1 abgestützt.

Die Fig. 4, 6, 7 und 8 zeigen verschiedene Beispiele für Anordnungs- und Ausbildungsmöglichkeiten der Befestigungsstellen 3.1, 3.4, 3.4' und 3.5. In Fig. 4 ist die Dreipunkt-Befestigung mit den Befestigungsstellen 3.1 und 3.5 entsprechend Fig. 1 in Draufsicht dargestellt, während in Fig. 6 ein Ausführungsbeispiel mit einer anderen Befestigungsstelle 3.1' gezeigt ist, bei der in einer einzigen Befestigungsplatte eine sich über die gesamte Breite des Gepäckträgers 2 erstreckende schlitzartige Öffnung 3.2 vorgesehen ist. Diese Ausbildung der Befestigungseinrichtung 3 mit derart angeordneten Befestigungsstellen 3.1, 3.1' ermöglicht die Festlegung des Behältnisses 1 an vier Punkten des Gepäckträgers 2, von denen sich jeweils zwei an den beiden Längsstreben 2.1 des Gepäckträgers 2 befinden und z.B. an den Eckpunkten eines gedachten Rechteckes angeordnet sind. Eine derartige Anordnung der Befestigungsstellen und Festlege-Punkte an dem Gepäckträger 2 ist z.B. dann günstig, wenn in dem bezüglich der Breite mittleren Bereich des Behältnisses 1 ein Schutzblech die Zugänglichkeit erschwert. Zusätzlich zu den Befestigungsplatten weist das Behältnis 1 auch einen Doppel-Haken 1.1 auf, wie er von herkömmlichen Drahtkörben her bekannt ist. Ein derartiger Haken 1.1, der eine Querstrebe 2.2 untergreift, ermöglicht im Zusammenwirken mit zwei Befestigungsplatten 3.1, an denen die beiden Längsstreben 2.1 untergreifende Befestigungsstücke 4 festgelegt sind, ebenfalls eine gegenüber herkömmlichen Befestigungsarten verbesserte und sicherere Festlegung des Behältnisses 1 an dem Gepäckträger 2.

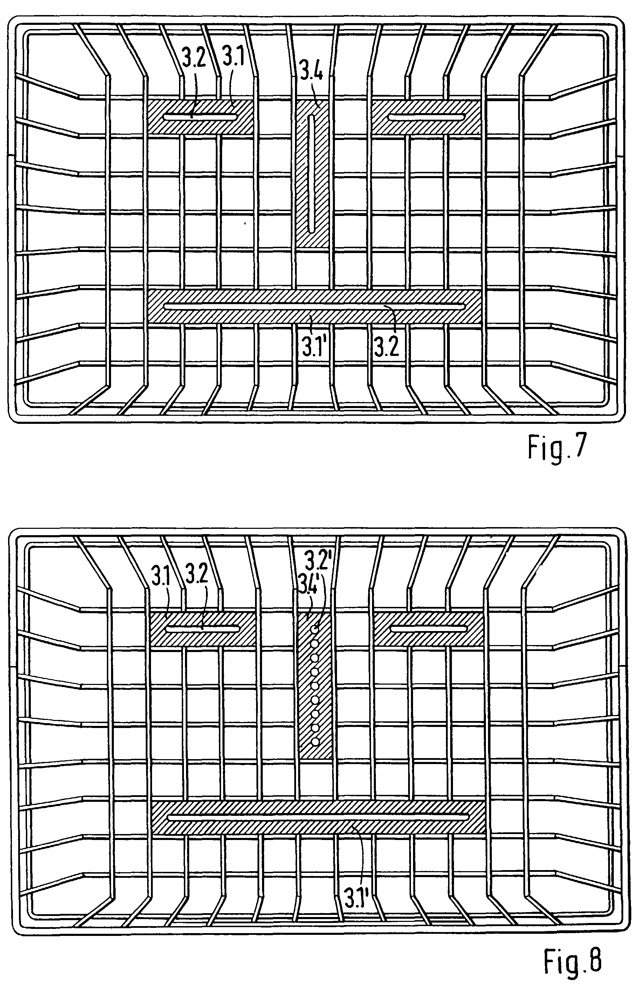

Die Befestigungsplatten 3.1, 3.1' und 3.4 gemäß Fig. 7 lassen eine alternative Befestigung lediglich an den beiden Längsstreben 2.1, wie bei dem Ausführungsbeispiel gemäß Fig. 6, oder eine Dreipunkt-Befestigung gemäß den in den Fig. 1 und 4 gezeigten Ausführungsbeispielen sowie eine Kombination dieser Anbringmöglichkeiten zu.

Bei dem Ausführungsbeispiel gemäß Fig. 8 ist die in Fig. 7 mit einem Langloch versehene Befestigungsplatte 3.4 durch eine mit Befestigungsbohrungen 3.2' versehene Befestigungsplatte 3.4' ersetzt. Die Befestigungsbohrungen 3.2' sind in einer Reihe in Längsrichtung des Gepäckträgers 2 hintereinander und voneinander getrennt angeordnet. Auf diese Weise kann eine bestimmte Befestigungsposition für einen vorhandenen Gepäckträger stets leicht gewählt werden. Als Befestigungselement kann an einer solchen Befestigungsposition z.B. ein Haken fest, aber verstellbar angeordnet werden.

Ähnliche weitere Anordnungsmöglichkeiten der Befestigungsstellen sind denkbar und in dem Boden des Behältnisses 1 integrierbar. Auch müssen die Öffnungen nicht als Durchbrüche der Befestigungsplatten ausgebildet sein, sondern können z.B. als T-Nut an der Unterseite der Platte ausgestaltet sein. Die Befestigungselemente können beispielsweise auch als Schnellspannverschlüsse ausgebildet sein.

In den Fig. 9A bis 13 sind zwei weitere Ausführungsformen der Befestigungseinrichtung 3 gezeigt.

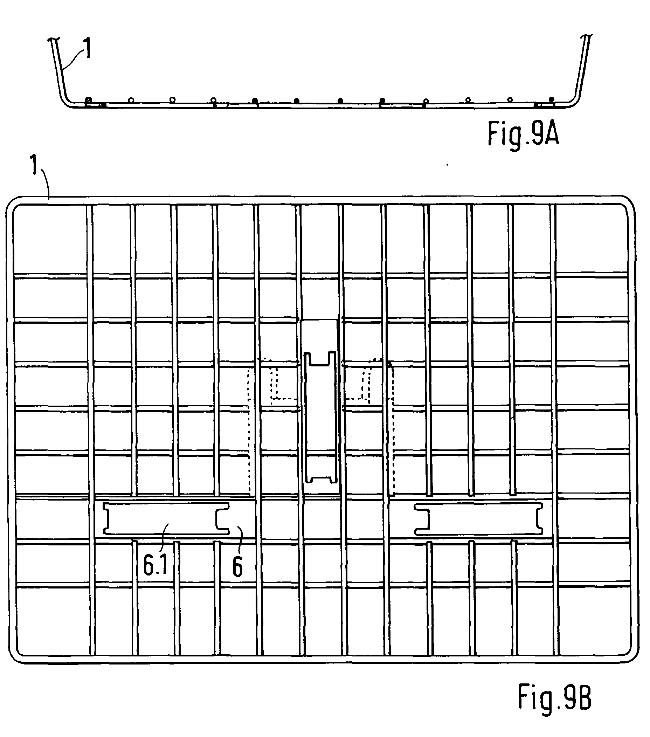

In den Fig. 9A und 9B sind drei Befestigungsstellen mit Halteplatten 6 und länglichen Öffnungen 6.1 im Querschnitt und in Draufsicht dargestellt. Zwei der Halteplatten 6 sind dabei in Querrichtung zum Gepäckträger angeordnet, während die dritte im wesentlichen in der Mitte des Gepäckträgers in dessen Längsrichtung angeordnet ist.

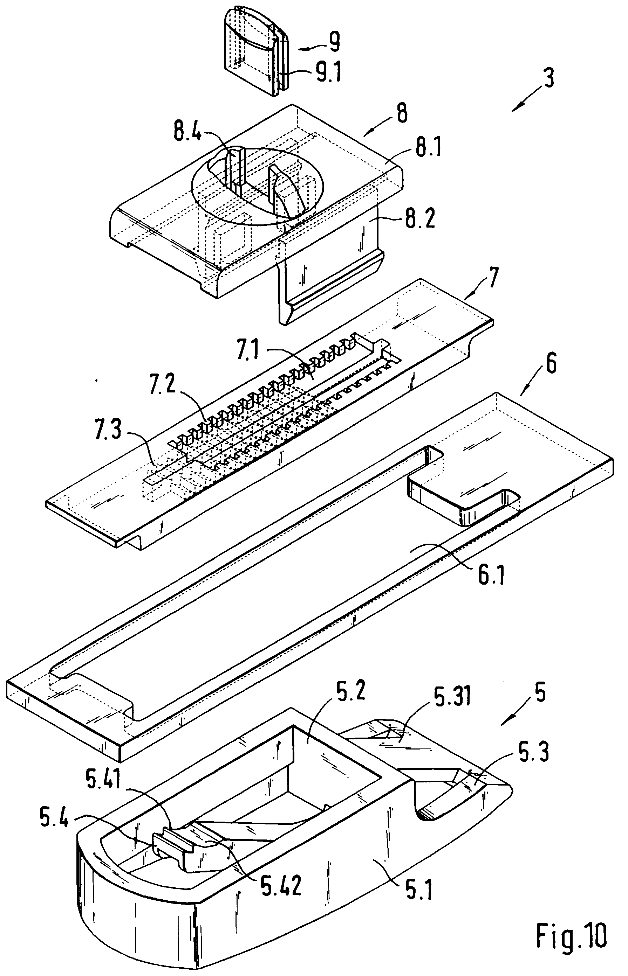

Die in Fig. 10 in perspektivischer Explosionsdarstellung wiedergegebene weitere Befestigungsvorrichtung 3 weist im wesentlichen einen unterhalb der Gepäckträgerstreben anzuordnenden Schlitten 5, die in dem Behältnis 1 integrierte Halteplatte 6, ein in die Öffnung 6.1 der Halteplatte 6 einsetzbares Arretierelement 7, einen oberhalb des Arretierelements 7 angeordneten Schieber 8 sowie eine in dem Schieber 8 gehaltene, an dem Arretierelement 7 fixierbare Schiebersicherung 9 auf.

Der Schlitten 5 besitzt einen Rahmen 5.1, der einen Freiraum 5.2 umgibt sowie einen Klemmabschnitt 5.3 mit einer Klemmzunge 5.3, der im Befestigungszustand des Behältnisses 1 unter eine zugehörige Strebe geschoben ist. In den Freiraum 5.2 ragt in dessen Längsrichtung von dem an den Klemmabschnitt 5.3 angrenzenden Rahmenteil ausgehend eine nach oben zeigende Arretierzunge 5.4, die an ihrem freien Ende auf der Oberseite eine Gegenzahnung 5.41 und eine Mulde 5.42 aufweist. Der Rahmen 5.1 stützt sich im zusammengesetzten Zustand an der Unterseite der Halteplatte 6 ab.

Oberhalb der Halteplatte 6 wird das Arretierelement 7 mit einem mittleren Abschnitt in die Öffnung 6.1 eingesetzt und liegt mit flacheren seitlichen Endabschnitten auf den schmalen Rändern außerhalb der Öffnung 6.1 auf der Halteplatte 6 auf. Dabei sind seitlich des plattenartigen Arretierelements 7 zwei Abschnitte der Öffnung 6.1 freigelassen, die Führungsbahnen für den Schieber 8 bilden. Das brückenartig angeordnete Arretierelement 7 kann alternativ auch an der Halteplatte 6 angeformt sein. Auf der Unterseite besitzt das Arretierelement 7 eine mit der Gegenzahnung 5.41 zusammenwirkende Zahnung 7.3, wobei die Gegenzahnung 5.41 und die Zahnung 7.3 zum Abstützen in der Befestigungsstellung steile Zahnflanken und zum Verschieben in die Befestigungsstellung flache Zahnflanken aufweisen. Auf der Oberseite des Arretierelements 7 ist eine Aussparung 7.1 mit beidseitig einem längsverlaufenden gezahnten Rand 7.2 vorgesehen, der zum Einsetzen und Festlegen der Schiebersicherung 9 dient.

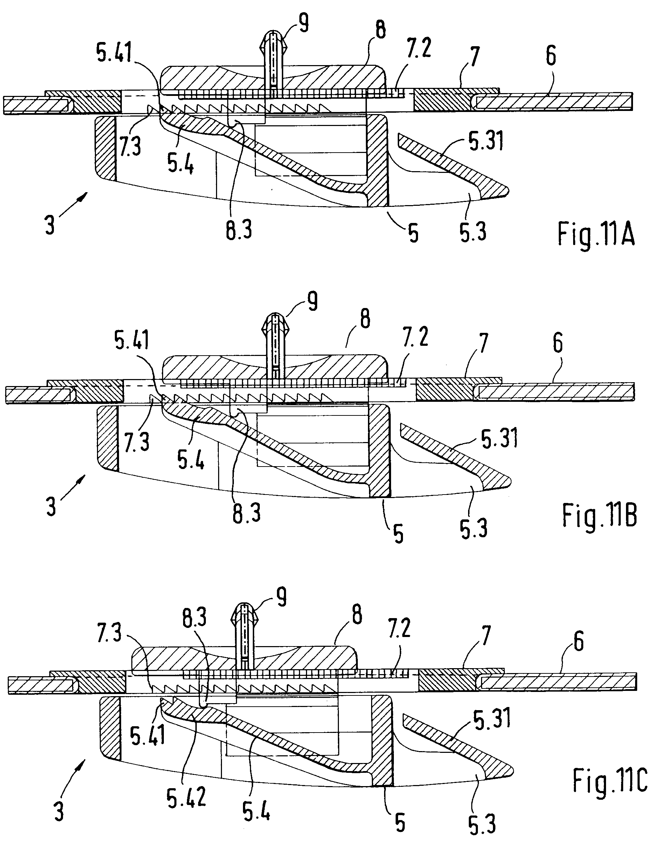

Oberhalb des Arretierelements 7 ist der Schieber 8 bezüglich der Halteplatte 6 verschiebbar angeordnet, wobei sich von einem plattenartigen Basisabschnitt 8.1 seitlich jeweils ein Haltesteg 8.2 durch die Abschnitte der Öffnung 6.1 rechtwinklig nach unten erstreckt. Die zur Seite federnd ausgebildeten Haltestege 8.2 besitzen an ihrem freien Ende auf der Außenseite eine nach innen gerichtete Einlaufschräge, die auf ihrer Oberseite mit einem Rastabsatz abgeschlossen sind. Zum Zusamnmensetzen der Befestigungseinrichtung 3 greifen die Haltestege 8.2 durch die seitlichen Abschnitte der Öffnung 6.1 in den Frelraum 5.2 des Schlittens 5 und untergreifen einen auf der Innenseite des Rahmens 5.1 vorgesehenen Gegenabsatz. Zum Freigeben aus einer Befestigungsstellung ist an der Unterseite des Schiebers 8 ein in den Fig. 11A bis 11C gezeigter Gleitvorsprung 8.3 vorgesehen, der beim Zurückschieben aus der Befestigungsstellung auf die Arretierzunge 5.4 bis in die Mulde 5.42 aufgleitet und die Arretierzunge 5.4 soweit nach unten bewegt, daß die Gegenzahnung 5.41 außer Eingriff mit der Zahnung 7.3 tritt. Dadurch wird die Arretierung in der Befestigungsstellung freigegeben und beim weiteren Zurückschieben des Schiebers 8 wird dann auch der Schlitten 5 mitgenommen so daß der Klemmabschnitt 5.3 unter der zugeordneten Strebe des Gepäckträgers herausgeführt wird.

Auf der Oberseite des Schiebers 8 wird die Schiebersicherung 9 mit seitlichen Gleitnuten 9.1 in entsprechende Führungen 8.4 des Schiebers 8 eingesetzt und kann, wie ebenfalls aus den Fig. 11A bis 11C ersichtlich, mit den beiden gezahnten Rändern 7.2 des Arretierelements 7 in Eingriff gebracht werden (Fig. 11A). In der Befestigungsstellung kann bei dieser Sicherung die Arretierung zwischen der Gegenzahnung 5.41 und der Zahnung 7.3 nicht versehentlich gelöst werden. Zum Freigeben aus der Befestigungsstellung wird das Sicherungselement, wie die Fig. 11B und 11C zeigen, nach oben gezogen, wonach der Schieber 8 zurückgeschoben werden kann, wobei die Schiebersicherung gleichzeitig eine Handhabe bildet.

Als Führungsbahnen können beispielsweise auch die seitlichen Längsränder der Halteplatte 6 ausgebildet werden.

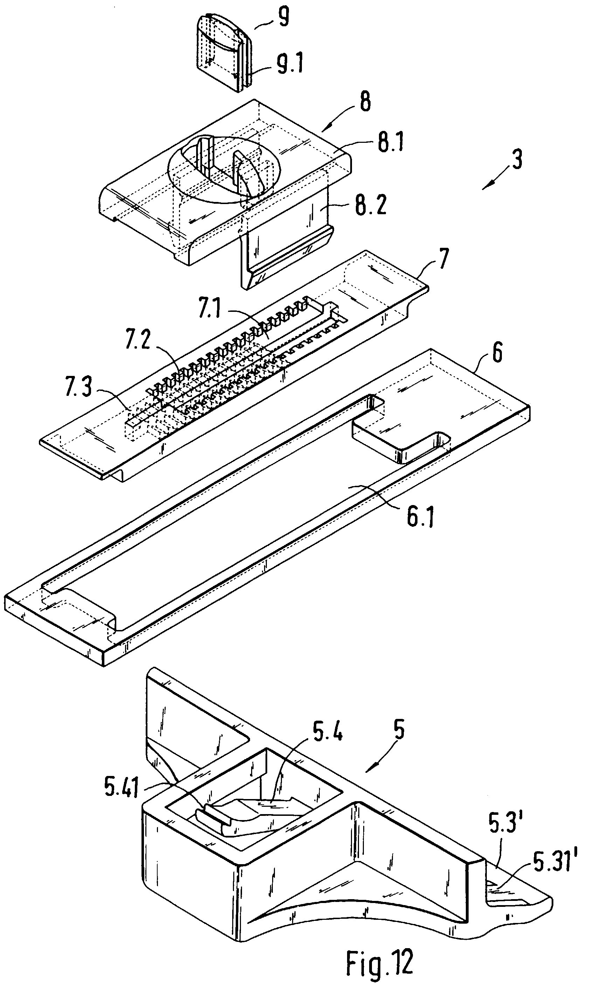

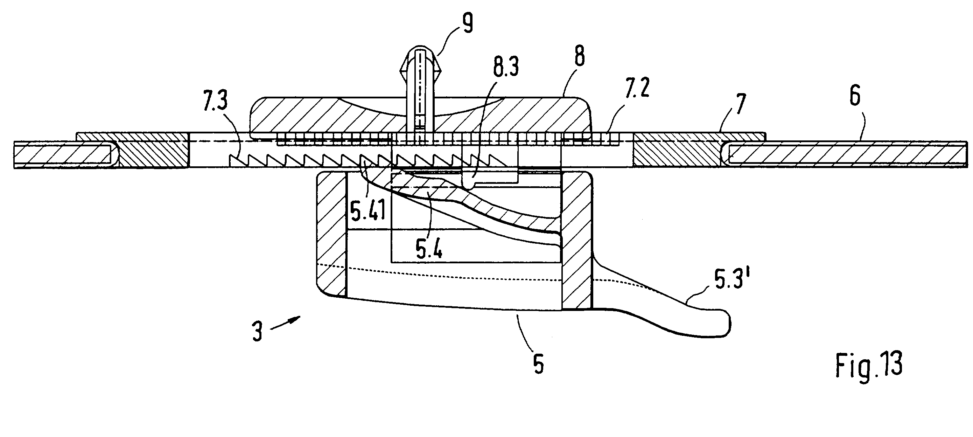

Ein weiteres Ausführungsbeispiel für die Befestigungseinrichtung ist in den Fig. 12 und 13 gezeigt, wobei der Aufbau prinzipiell dem Ausführungsbeispiel gemäß den Fig. 9A bis 11C entspricht. Jedoch ist der Schlitten 5 im Bereich seines Klemmabschnitts 5.3' breiter ausgebildet als bei dem vorhergehenden Ausführungsbeispiel, und es können mehrere Klemmzungen 5.31' vorgesehen sein, so daß eine noch stabilere Festlegung unter den Streben des Gepäckträgers erzielbar ist. Die übrigen Teile entsprechen denjenigen des vorhergehenden Ausführungsbeispiels und sind mit entsprechenden Bezugszeichen versehen.

Die beschriebenen Maßnahmen ergeben bei einfacher Ausbildung und Handhabung eine stabile Festlegung an unterschiedlich breiten und langen Gepäckträgern ohne aufwendige Umbaumaßnahmen.

## Patentansprüche

1. Behältnis mit Befestigungseinrichtung zum abnehmbaren Festlegen an einem Fahrradgepäckträger, wobei mindestens drei Befestigungsstellen vorgesehen sind, von denen mindestens zwei mit einer länglichen Öffnung oder mehreren in einer Reihe angeordneten Öffnungen oder zwei beidseitigen, zueinander parallelen Führungsbahnen versehen sind, und wobei in den Öffnungen Befestigungsstücke quer zu einer jeweils zugeordneten Strebe des Gepäckträgers verstellbar gelagert sind,
dadurch gekennzeichnet,
daß die Befestigungsstellen (1.1; 3.1, 3.1', 3.4, 3.4', 3.5, 6) fest in das Behältnis (1) integriert sind, so daß das Behältnis (1) unmittelbar an mindestens drei Punkten des Gepäckträgers (2) abnehmbar festlegbar ist,
daß die Befestigungsstücke (4, 5) auf einer Seite der zugeordneten Streben mittels eines Sicherungsmittels (3.3, 7, 9) in der Befestigungsstellung gesichert festgelegt sind, wobei sie mit einem Halteabschnitt (4.5, 5.3, 5.3') die zugeordneten Streben untergreifen, und
daß die Befestigungsstücke (4, 5) durch Lockern der Sicherungsmittel (3.3, 7, 9) an den Befestigungsstellen (1.1, 3.1, 3.1', 3.4, 3.4', 3.5, 6.1) soweit zurückstellbar sind,
daß die Halteabschnitte (4.5, 5.3, 5.3') aus dem Bereich unter den zugeordneten Streben herausgeschoben sind.

2. Behältnis nach Anspruch 1,
dadurch gekennzeichnet,
daß die Befestigungsstellen durch am Boden des Behältnisses (1) angeschweißte oder angeklebte Plattenelemente (3.1, 3.1', 3.4, 3.4', 3.5, 6) gebildet sind, und
daß die Öffnungen oder die Führungsbahnen als langlochförmige Durchbrüche (3.2, 6.1) oder Durchgangsbohrungen (3.2') ausgebildet sind,
durch die Bolzen oder Vorsprünge (8.2) der Befestigungselemente (3.3) steckbar sind.

3. Behältnis nach Anspruch 1 oder 2,
dadurch gekennzeichnet,
daß mindestens zwei der Festlege-Punkte des Gepäckträgers (2) an dessen Längsstreben (2.1) und mindestens ein Festlege-Punkt an einer Querstrebe (2.2) angeordnet sind, und
daß die Öffnungen (3.2, 3.2') senkrecht zu den zugeordneten Streben (2.1 bzw. 2.2) ausgerichtet sind.

4. Behältnis nach Anspruch 1 oder 2,
dadurch gekennzeichnet,
daß vier Befestigungsstellen (3.1, 3.1') vorgesehen sind, und
daß die vier zugeordneten Festlege-Punkte des Gepäckträgers (2) an dessen Längsstreben (2.1) entsprechend den Eckpunkten eines gedachten Rechtecks oder Quadrats liegen.

5. Behältnis nach einem der Ansprüche 1 bis 4,
dadurch gekennzeichnet,
daß mindestens zwei der Befestigungsstellen (1.1, 3.1, 3.1', 3.4, 3.4', 3.5, 6) in einer gemeinsamen Befestigungsplatte (3.1') angeordnet sind.

6. Behältnis nach einem der Ansprüche 1 bis 5,
dadurch gekennzeichnet,
daß die Sicherungsmittel Befestigungsschrauben (3.3) sind, mit denen Befestigungsstücke (4), die die Streben (2.1 bzw. 2.2) des Gepäckträgers (2) untergreifen, anziehbar sind.

7. Behältnis nach einem der Ansprüche 1 bis 6,
dadurch gekennzeichnet,
daß die Schraubaufnahmen (4.2) in einem Mittelabschnitt (4.1) der Befestigungsstücke (4, 5) angeordnet sind, und
daß an dem einen Endbereich des Mittelabschnittes ein zur zugeordneten Befestigungsstelle (3.1, 3.1', 3.4', 3,4'') gerichteter Vorsprung zum Bilden eines Halteabschnittes (4.5) vorgesehen ist, der im festgelegten Zustand eine Strebe (2.1, 2.2) hintergreift, und an dem anderen Endbereich ein zur zugeordneten Befestigungsstelle (3.1, 3.1', 3.4', 3.4'') gerichteter Stützabschnitt (4.3) vorgesehen ist, der sich im Bereich der Befestigungsstelle abstützt.

8. Behältnis nach Anspruch 7,
dadurch gekennzeichnet,
daß der Stützabschnitt (4.3) in einem Führungsabschnitt (4.4) endet, der in die schlitzförmige Öffnung (3.2, 3.2') ragt und darin geführt ist.

9. Behältnis nach einem der Ansprüche 1 bis 5,
dadurch gekennzeichnet,
daß die Sicherungsmittel ein im Bereich der Öffnungen (6.1) an der jeweiligen Befestigungsstelle (6) festgelegtes Arretierelement (7) und einen darüber angeordneten Schieber (8) umfassen, der mittels einer Schiebersicherung (9) an dem Arretierelement (7) gegen ein Verschieben festlegbar ist, und
daß der Schieber (8) mittels mindestens eines Vorsprungs (8.2) die Öffnung (6) durchragt und mit einem Schlitten (5) als Befestigungsstück lösbar verbunden und in die Befestigungsstellung schiebbar und aus dieser zurückschiebbar ist.

10. Behältnis nach Anspruch 2,
dadurch gekennzeichnet,
daß der Schieber (8) mit zwei seitlichen, in Verstellrichtung verlaufenden Haltestegen (8.2) als Vorsprünge versehen ist, die in der Öffnung (6.1) geführt sind.

11. Behältnis nach Anspruch 10,
dadurch gekennzeichnet,
daß die Haltestege (8.2) federnd ausgebildet sind und an ihren freien Enden eine Einführschräge und einen Rastabsatz aufweisen, so daß sie an dem Schlitten (5) verrastbar sind, wobei der Rastabsatz einen Gegenabsatz oder den unteren Rand des Schlittens (5) untergreift.

12. Behältnis nach einem der Ansprüche 9 bis 11,
dadurch gekennzeichnet,
daß der Schlitten (5) einen einen Freiraum (5.2) umfassenden Rahmen (5.1) aufweist,
daß das Arretierelement (7) als die Öffnung (6.1) in Längsrichtung überspannende Brücke ausgebildet ist, die beiderseits zwei Abschnitte der Öffnung (6.1) als Führungsbahnen freiläßt und an seiner dem Schlitten (5) zugekehrten Unterseite eine Zahnung (7.3) trägt, mit der zum Arretieren in der Befestigungsstellung eine Gegenzahnung (5.41) in Eingriff kommt, welche sich an der zugekehrten Oberseite einer in Verstellrichtung des Schlittens (5) gerichteten, in den Freiraum (5.2) ragenden federnden Arretierzunge (5.4) des Schlittens (5) befindet.

13. Behältnis nach Anspruch 12,
dadurch gekennzeichnet,
daß zum Zurückschieben des Schlittens (5) aus der Befestigungsstellung der Schieber (8) relativ zu dem Schlitten (5) begrenzt in Verstellrichtung verschiebbar ist, bis ein an der Unterseite des Schiebers (8) befindlicher federnder Gleitvorsprung (8.3) auf die Arretierzunge (5.4) aufgleitet und diese soweit nach unten drückt, daß die Gegenzahnung (5.41) außer Eingriff mit der Zahnung (7.3) kommt.

14. Behältnis nach einem der Ansprüche 9 bis 13,
dadurch gekennzeichnet,
daß das Arretierelement (7) auf seiner dem Schieber (8) zugekehrten Oberseite eine gezahnte oder gelochte Struktur (7.2) aufweist, in die die in dem Schieber (8) gehaltene Schiebersicherung (9) einsetzbar ist.

15. Behältnis nach einem der Ansprüche 1 bis 5 oder 9 bis 14,
dadurch gekennzeichnet,
daß der Halteabschnitt (5.3, 5.3') eine sich unter der zugeordneten Strebe verspannende Klemmzunge (5.31) aufweist.
